# FASCICULE DE BREVET EUROPEEN

(11) **EP 4 028 286 B1**
(45) Date de publication et mention de la délivrance du brevet: **19.07.2023**
(21) Numéro de dépôt: 20775373.2
(22) Date de dépôt: 18.08.2020
(51) Int. Cl.: B60Q 1/00

(54) **AMÉNAGEMENT DE PARECHOC POUR VÉHICULE AUTOMOBILE**
STOSSDÄMPFERANORDNUNG FÜR EIN KRAFTFAHRZEUG
BUMPER ARRANGEMENT FOR A MOTOR VEHICLE

(30) Priorité: 13.09.2019 FR 1910125; 13.09.2019 FR 1910126
(43) Date de publication de la demande: 20.07.2022
(73) Titulaire: PSA Automobiles SA, 78300 Poissy (FR)
(72) Inventeur: ROYER, Guillaume, 91680 BRUYERES LE CHATEL (FR); CHUFFART, Frederic, 95530 LA FRETTE SUR SEINE (FR)
(86) Numéro de dépôt international: PCT/FR2020/051478
(87) Numéro de publication internationale: WO 2021/048479

(56) Documents cités:
- FR-A1- 3 100 772
- JP-A- H08 150 885
- US-A1- 2011 204 680
- US-A1- 2016 144 900

## Description

Le contexte technique de la présente invention est celui organes de protection des dispositifs d'éclairage de véhicules automobiles. Plus particulièrement, l'invention a trait à un aménagement de parechoc. US2011/204680A1 divulgue un aménagement de pare-choc pour véhicule automobile conformément au préambule de la revendication 1.

Dans l'état de la technique, on connait des dispositifs d'éclairage et/ou de signalisation pour véhicule automobile. De tels dispositifs d'éclairage et/ou de signalisation comprennent généralement au moins une source d'éclairage et un système optique permettant de mettre en forme un faisceau d'éclairage projeté destiné à éclairer une partie de la route située devant le véhicule automobile et/ou d'émettre un signal lumineux de signalisation, tel que par exemple un feu clignotant.

De manière connue, de tels dispositifs d'éclairage et/ou de signalisation sont ensuite encapsulés dans un boitier et soudés à une glace de fermeture afin de protéger les dispositifs d'éclairage et/ou de signalisation durant le fonctionnement du véhicule automobile.

Selon la géométrique des glaces de fermeture des dispositifs d'éclairage et/ou de signalisation, la liaison technique entre un élément de parechoc situé en dessous de ces dispositifs d'éclairage et/ou de signalisation peut être difficile à obtenir. De manière plus particulière, en fonction des gammes de finition d'un même véhicule, la forme et la géométrie de la glace de fermeture du dispositif d'éclairage et/ou de signalisation varie, rendant impossible de conserver les mêmes éléments de parechoc entre les différentes gammes d'un même véhicule. La présente invention a pour objet de proposer un nouvel aménagement de parechoc pour véhicule automobile afin de répondre au moins en grande partie aux problèmes précédents et de conduire en outre à d'autres avantages.

Un autre but de l'invention est de proposer une solution modulaire et utilisable dans les différentes gammes d'un même véhicule automobile afin de protéger les dispositifs d'éclairage et/ou de signalisation durant leur fonctionnement.

Un autre but de l'invention est de faciliter l'assemblage d'un tel aménagement de parechoc sur un véhicule automobile afin de réduire les coûts de fabrication.

Selon un premier aspect de l'invention, on atteint au moins l'un des objectifs précités avec un aménagement de parechoc pour véhicule automobile, l'aménagement de parechoc comprenant (i) un dispositif d'éclairage et/ou de signalisation avant, (ii) une peau de parechoc située en-dessous du dispositif d'éclairage et/ou de signalisation, (iii) une extension de peau de parechoc fixée solidairement à une extrémité longitudinale supérieure de la peau de parechoc par l'intermédiaire d'un organe de fixation, l'extension de peau de parechoc étant configuré pour protéger une partie basse du dispositif d'éclairage et/ou de signalisation de véhicule automobile. Dans l'aménagement de parechoc conforme au premier aspect de l'invention, l'organe de fixation de l'extension de peau de parechoc sur la peau de parechoc forme une charnière

L'organe de fixation permet ainsi de fixer solidairement l'extension de peau de parechoc sur la peau de parechoc au travers d'une liaison articulée qui autorise une mobilité de l'extension de peau de parechoc relativement à la peau de parechoc. Plus spécifiquement, dans le contexte de l'invention, l'organe de fixation de l'extension de peau de parechoc sur la peau de parechoc forme une charnière afin de permettre de faire pivoter l'extension de peau de parechoc relativement à la peau de parechoc.

La charnière formant l'organe de fixation de l'extension de peau de parechoc sur la peau de parechoc est ainsi configurée pour pouvoir prendre n'importe quelle configuration angulaire entre une configuration ouverte et une configuration fermée. La configuration angulaire de la charnière s'entend de sa rotation autour de son axe de rotation. Dans la configuration angulaire ouverte de la charnière, l'extension de peau de parechoc est libre en rotation autour de l'axe de rotation de la charnière. Cette configuration angulaire correspond à une configuration d'assemblage de l'aménagement de parechoc. Dans la configuration angulaire fermée de la charnière, l'extension de peau de parechoc est configurée dans sa configuration assemblée et définitive, telle qu'on la trouve lorsque l'aménagement de parechoc est mis en oeuvre sur le véhicule automobile avec lequel il est destiné à collaborer.

Dans le contexte de l'invention, la protection du dispositif d'éclairage et/ou de signalisation du véhicule automobile s'entend de l'extension de peau de parechoc configurée pour coiffer au moins une partie basse du dispositif d'éclairage et/ou de signalisation lors du montage. En d'autres termes, l'extension de peau de parechoc est configurée pour fermer au moins la partie basse du dispositif d'éclairage et/ou de signalisation.

Cette configuration avantageuse permet ainsi de protéger le dispositif d'éclairage et/ou de signalisation durant le fonctionnement du véhicule automobile. En outre, la réalisation d'une telle extension de peau de parechoc située au niveau de l'extrémité longitudinale de la peau de parechoc permet de l'adapter à de nombreuses géométries et/ou formes et/ou emplacement du dispositif d'éclairage et/ou de signalisation en évitant ainsi de laisser des ouvertures en face avant du véhicule automobile lorsque le dispositif d'éclairage et/ou de signalisation y est monté. Consécutivement, l'invention conforme à son premier aspect permet d'optimiser les coûts de production et de faciliter son industrialisation.

Dans le contexte de l'invention, la partie basse du dispositif d'éclairage et/ou de signalisation est celle située à proximité du parechoc, relativement à une partie haute dudit dispositif d'éclairage et/ou de signalisation qui est située à proximité d'un parebrise du véhicule automobile.

L'aménagement de parechoc conforme au premier aspect de l'invention comprend avantageusement au moins un des perfectionnements ci-dessous, les caractéristiques techniques formant ces perfectionnements pouvant être prises seules ou en combinaison :
- un axe de rotation de la charnière formant l'organe de fixation est parallèle ou sensiblement parallèle à l'extrémité longitudinale supérieure de la peau de parechoc ;
- la charnière formant l'organe de fixation comprend un premier élément de charnière formé sur l'extrémité longitudinale supérieure de la peau de parechoc, et un deuxième élément de charnière formé sur l'extrémité longitudinale inférieure de l'extension de peau de parechoc. Le premier élément de charnière est configuré pour collaborer avec le deuxième élément de charnière afin de fixer solidairement l'extension de peau de parechoc sur la peau de parechoc tout en autorisant un mouvement relatif de rotation entre elles. Plus particulièrement, une collaboration du premier élément de charnière avec le deuxième élément de charnière est du type d'un pivot ;
- la charnière est du type d'une charnière clip, le premier élément de charnière étant configuré pour être fixé de manière détachable au deuxième élément de charnière. Cette configuration avantageuse permet de faciliter l'assemblage de l'extension de peau de parechoc sur la peau de parechoc. A titre d'exemple non limitatif, le premier élément de charnière peut prendre la forme d'au moins une portée cylindrique s'étendant selon un axe de rotation, et le deuxième élément de charnière peut prendre la forme d'au moins un clip collaborant avec chaque au moins une portée cylindrique formant le premier élément de charnière, chaque clip formant une mâchoire pouvant pivoter autour de la portée cylindrique correspondante avec laquelle elle collabore par engagement de formes complémentaires. De manière avantageuse, le premier élément de charnière comprend deux portées cylindriques coaxiales ; et le deuxième élément de charnière comprend deux clips situés en regard. Alternativement, le deuxième élément de charnière peut comprendre au moins une portée cylindrique - et préférentiellement deux portées cylindriques coaxiales - et le premier élément de charnière peut comprendre au moins un clip - et préférentiellement deux clips - formant une mâchoire pouvant pivoter autour de la portée cylindrique correspondante avec laquelle il collabore ;
- le premier élément de charnière est configuré pour être encliqueté avec le deuxième élément de charnière ;
- l'aménagement de parechoc conforme au premier aspect de l'invention comprend un support de fixation configuré pour permettre une fixation détachable de l'extension de peau de parechoc sur ledit support de fixation, le support de fixation étant solidarisé à la peau de parechoc. Ainsi, l'extension de peau de parechoc est fixée sur le support de fixation par l'intermédiaire d'un clipsage, l'extension de peau de parechoc comportant des organes de clipsage collaborant avec des organes complémentaires de clipsage situés sur le support de fixation. Dans ce cas, dans la configuration angulaire ouverte de la charnière formant l'organe de fixation de l'extension de peau de parechoc sur la peau de parechoc, l'extension de peau de parechoc n'est pas fixée solidairement au support de fixation ; et dans la configuration angulaire fermée de la charnière, l'extension de peau de parechoc est fixée solidairement au support de fixation ;
- l'aménagement de parechoc conforme au premier aspect de l'invention comprend un renfort de parechoc sur lequel la peau de parechoc est solidarisé. De manière avantageuse, le support de fixation est fixé de manière détachable au renfort de parechoc. Ainsi, lorsque la charnière formant l'organe de fixation de l'extension de peau de parechoc sur la peau de parechoc est dans sa configuration angulaire fermée, l'extension de peau de parechoc est d'une part fixée solidairement et de manière amovible à la peau de parechoc par l'intermédiaire de l'organe de fixation formant la charnière, et d'autre part l'extension de peau de parechoc est fixée sur le support de fixation qui est lui-même fixé solidairement au renfort de parechoc sur lequel est fixée la peau de parechoc. Cette configuration avantageuse permet de pouvoir accoupler une pluralité de formes différentes pour l'extension de peau de parechoc - en fonction des différents types de véhicules automobiles - avec la peau de parechoc en garantissant un bon niveau de qualité, de robustesse et de durabilité de ces différentes pièces techniques ;
- le support de fixation est fixé au renfort de parechoc par l'intermédiaire d'au moins une vis de fixation. Préférentiellement, le support de fixation est fixé au renfort de parechoc par l'intermédiaire d'exactement deux vis de fixation ;
- le renfort de parechoc est situé en dessous de la peau de parechoc, de sorte que le renfort de parechoc ne soit pas visible lorsque la peau de parechoc est solidarisée sur lui. De manière préférentielle, la peau de parechoc est clipsée sur le renfort de parechoc ;
- l'extension de peau de parechoc est formée par une pièce plastique. Cette configuration permet avantageusement de réduire les coûts de fabrication et de faciliter les procédés de fabrication de l'extension de peau de parechoc. D'une manière générale, l'extension de peau de parechoc et/ou le support de fixation et/ou le renfort de parechoc et/ou la peau de parechoc sont formées de plastique.

Selon un deuxième aspect de l'invention, il est proposé un véhicule automobile comprenant au moins un aménagement de parechoc conforme au premier aspect de l'invention ou selon l'un quelconque de ses perfectionnements, chaque au moins un aménagement de parechoc étant associé à l'un des dispositifs d'éclairage et/ou de signalisation avant du véhicule automobile afin de fermer au moins la partie basse du dispositif d'éclairage et/ou de signalisation correspondant.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue en perspective d'un véhicule automobile conforme au deuxième aspect de l'invention et comportant un aménagement conforme au premier aspect de l'invention ;
[Fig.2] illustre une vue en coupe de l'aménagement conforme au premier aspect de l'invention et en cours d'assemblage sur le véhicule automobile, la charnière formant l'organe de fixation étant dans sa configuration angulaire ouverte ;
[Fig.3] illustre une vue en coupe de l'aménagement de la FIGURE 2 monté sur le véhicule automobile, la charnière formant l'organe de fixation étant dans sa configuration angulaire fermée ;
[Fig.4] illustre une vue en perspective arrière de l'aménagement illustré sur la FIGURE 3.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

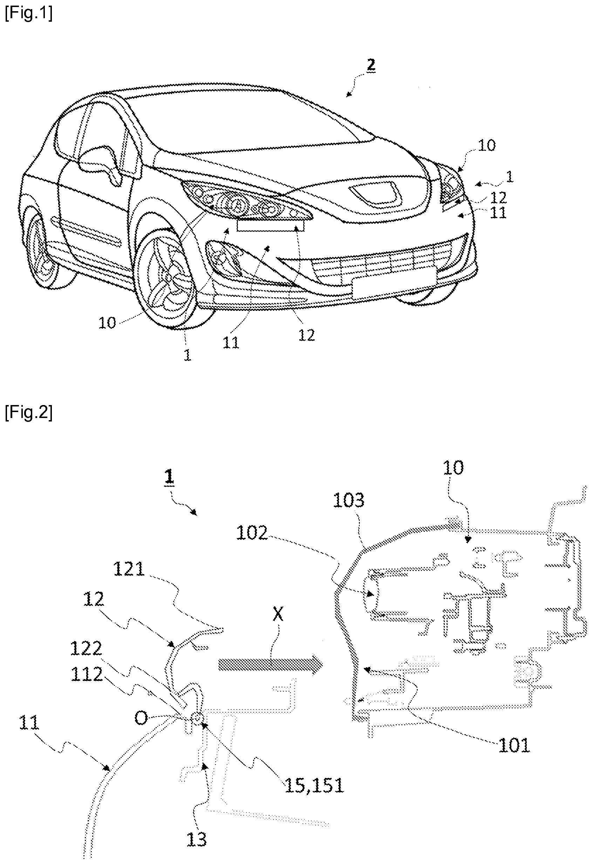

En référence à la FIGURE 1, un véhicule automobile 2 conforme au deuxième aspect de l'invention comprend un aménagement de parechoc 1 associé à chacun des dispositifs d'éclairage et/ou de signalisation 10 avant du véhicule automobile 2. Chaque aménagement de parechoc 1 comprend une peau de parechoc 11 située en-dessous du dispositif d'éclairage et/ou de signalisation 10 correspondant et une extension de peau de parechoc 12 située à une extrémité longitudinale supérieure de la peau de parechoc 12 afin de fermer au moins une partie basse 101 du dispositif d'éclairage et/ou de signalisation 10 du véhicule automobile 2.

L'aménagement de parechoc 1 va maintenant être décrit plus en détails en référence aux FIGURES 2 à 4.

D'une manière générale, l'aménagement de parechoc 1 conforme au premier aspect de l'invention comprend (i) le dispositif d'éclairage et/ou de signalisation avant 10 de véhicule automobile 2, la peau de parechoc 11 et l'extension de peau de parechoc 12 pour protéger la partie basse 101 du dispositif d'éclairage et/ou de signalisation 10. L'extension de peau de parechoc 12 est fixée solidairement à une extrémité longitudinale supérieure 121 de la peau de parechoc par l'intermédiaire d'un organe de fixation 15 formant une charnière 151.

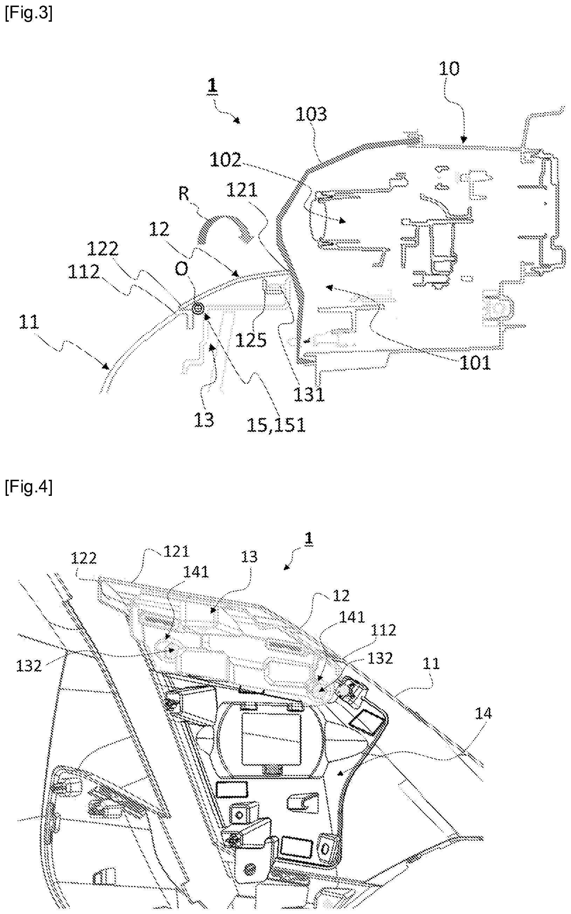

Dans l'exemple de réalisation illustré et visible plus particulièrement sur la FIGURE 2, l'aménagement de parechoc 1 est particulièrement adapté à des dispositifs d'éclairage et/ou de signalisation 10 du type pourvu de glace de fermeture 103 : l'extension de peau de parechoc 12 s'étend longitudinalement jusqu'à une extrémité inférieure d'un faisceau d'éclairage projeté par le dispositif d'éclairage et/ou de signalisation 10 afin d'éviter que l'extension de peau de parechoc 12 ne coupe ledit faisceau d'éclairage. Comme visible sur la FIGURE 3, une extrémité longitudinale supérieure 121 de l'extension de peau de parechoc 12 est située à proximité de la partie basse 101 du dispositif d'éclairage et/ou de signalisation 10 afin d'éviter que des zones ouvertes dudit dispositif d'éclairage et/ou de signalisation 10 ne soient présentes en face avant du véhicule automobile 2. En d'autres termes, l'extrémité longitudinale supérieure 121 de l'extension de peau de parechoc 12 est située à proximité et juste en dessous d'une optique de mise en forme 102 du dispositif d'éclairage et/ou de signalisation 10.

L'extension de peau de parechoc 12 est avantageusement faite de plastique.

Afin de faciliter son montage, l'extension de peau de parechoc 12 est solidarisée à la peau de parechoc 11 par l'intermédiaire de l'organe de fixation 15 formant la charnière 151. Il est ainsi possible de faire pivoter la charnière 151 autour de son axe de rotation O afin de la configurer dans n'importe quelle configuration angulaire entre une configuration ouverte visible sur la FIGURE 2, et une configuration fermée visible sur la FIGURE 3.

L'axe de rotation O de la charnière 151 formant l'organe de fixation 15 est parallèle ou sensiblement parallèle à l'extrémité longitudinale supérieure 112 de la peau de parechoc 11.

La charnière 151 comprend un premier élément de charnière formé sur l'extrémité longitudinale supérieure 112 de la peau de parechoc 11, et un deuxième élément de charnière formé sur l'extrémité longitudinale inférieure 122 de l'extension de peau de parechoc 12. Le premier élément de charnière est configuré pour collaborer avec le deuxième élément de charnière afin de fixer solidairement l'extension de peau de parechoc 12 sur la peau de parechoc 11 tout en autorisant un mouvement de rotation entre elles, relativement à l'axe de rotation O.

La charnière 151 est du type d'une charnière clip, le premier élément de charnière étant configuré pour être fixé de manière détachable au deuxième élément de charnière. Le premier élément de charnière peut prendre la forme d'une ou plusieurs portée(s) cylindrique(s) coaxiales et s'étendant selon l'axe de rotation O, et le deuxième élément de charnière peut prendre la forme d'un ou plusieurs un clip collaborant avec chaque portée cylindrique formant le premier élément de charnière. En d'autres termes, chaque clip forme une mâchoire pouvant pivoter autour de la portée cylindrique correspondante avec laquelle elle collabore par engagement de formes complémentaires.

Le premier élément de charnière est configuré pour être encliqueté avec le deuxième élément de charnière.

Outre sa liaison par la charnière 151, l'extension de peau de parechoc 12 est aussi solidarisée indirectement sur la peau de parechoc 11 par l'intermédiaire d'une pièce intermédiaire de fixation située entre la peau de parechoc 11 et l'extension de peau de parechoc 12. Dans l'exemple de réalisation illustré sur les FIGURES 2 à 4, l'aménagement de parechoc 1 comprend :
- un support de fixation 13 visible sur les FIGURES 2 à 4 et configuré pour permettre une fixation détachable de l'extension de peau de parechoc 12 sur ledit support de fixation 13. Ainsi, dans ce cas de figure, l'extension de peau de parechoc 12 est alors - d'une part - liée solidairement à la peau de parechoc 11 par l'intermédiaire de la charnière 151 formant l'organe de fixation 13 ; et - d'autre part - l'extension de peau de parechoc 12 est fixée solidairement et de manière détachable au support de fixation 13 lorsque la charnière 151 est dans sa configuration angulaire fermée ;
- un renfort de parechoc 14 visible sur la FIGURE 4 et solidarisé à la peau de parechoc 11, le support de fixation 13 étant fixé de manière détachable au renfort de parechoc 14.

De manière avantageuse, lorsque la charnière 151 est configurée dans sa configuration angulaire fermée, l'extension de peau de parechoc 12 est fixée sur le support de fixation 13 par l'intermédiaire d'un clipsage, l'extension de peau de parechoc 12 comportant des organes de clipsage 125 collaborant avec des organes complémentaires 131 de clipsage situés sur le support de fixation 13.

Le renfort de parechoc 14 et le support de fixation 13 sont situés en dessous de la peau de parechoc 11 et de l'extension de peau de parechoc 12, de sorte que le renfort de parechoc 14 et le support de fixation 13 ne soient pas visibles lorsque l'extension de peau de parechoc 12 est assemblée sur la peau de parechoc 11 par leur intermédiaire.

Le support de fixation 13 est fixé au renfort de parechoc 14 par l'intermédiaire d'au moins une vis de fixation. Dans l'exemple de réalisation visible sur la FIGURE 4, le support de fixation 13 est fixé au renfort de parechoc 14 par l'intermédiaire de deux vis de fixation 132 collaborant avec des protrusions taraudées 141 situées en regard sur le renfort de parechoc 14.

Afin d'assembler l'aménagement de parechoc 1 conforme au premier aspect de l'invention, et comme visible sur la FIGURE 2, l'extension de parechoc 12 est d'abord engagée sur la peau de parechoc 11, respectivement au niveau de l'extrémité longitudinale inférieure 122 de l'extension de peau de parechoc 11 et de l'extrémité longitudinale supérieure 112 de la peau de parechoc 11, par l'intermédiaire de la charnière 151. La charnière 151 est alors mise dans sa configuration angulaire ouverte, de sorte que l'extrémité longitudinale supérieure 121 de l'extension de parechoc 12 demeure libre et déconnectée de la glace de fermeture 103 du dispositif d'éclairage et/ou de signalisation 10. Ensuite, l'ensemble formé notamment par la peau de parechoc 11 et l'extension de peau de parechoc 12 - et éventuellement le support de fixation 13 - est mis en appui contre la glace de fermeture 103 du dispositif d'éclairage et/ou de signalisation 10 selon un déplacement X illustré par la flèche sur la FIGURE 2 en direction dudit dispositif d'éclairage et/ou de signalisation 10.

Une fois en position contre le dispositif d'éclairage et/ou de signalisation 10, et comme visible sur la FIGURE 3, l'extension de peau de parechoc 12 est pivotée autour de l'axe de rotation O de la charnière 151 afin de configurée ladite charnière 151 dans sa configuration angulaire fermée. Le pivotement de l'extension de peau de parechoc 12 autour de l'axe de rotation O de la charnière 151 est illustré sur la FIGURE 3 par la flèche R. Dans cette configuration angulaire, l'extension de peau de parechoc 12 est alors clipsée sur le support de fixation 13 par l'intermédiaire des organes de clipsage 125 situées à distance de la charnière 151, du côté de l'extrémité longitudinale supérieure 121 de l'extension de peau de parechoc 12.

En synthèse, l'invention concerne un aménagement de parechoc 1 comportant une extension de peau de parechoc 12 fixée de manière détachable à une peau de parechoc 11 par l'intermédiaire d'une charnière 151 formant un organe de fixation 15 et autorisant un mouvement de rotation de l'extension de peau de parechoc 12 par rapport à la peau de parechoc 11 relativement à un axe de rotation O. L'extension de peau de parechoc 12 s'étend dans le prolongement de la peau de parechoc 11 afin de situer une extrémité longitudinale supérieure 121 de ladite extension de peau de parechoc 12 à proximité immédiate d'un dispositif d'éclairage et/ou de signalisation 10, de sorte à fermer au moins une partie basse 101 de celui-ci. Selon un deuxième aspect, l'invention concerne aussi un véhicule automobile 2 comportant un tel aménagement de parechoc 1.

Des caractéristiques supplémentaires de l'invention ont pour objet de proposer une solution modulaire et utilisable dans les différentes gammes d'un même véhicule automobile afin de protéger les dispositifs d'éclairage et/ou de signalisation durant leur fonctionnement. D'autres caractéristiques supplémentaires ont pour objet e proposer une solution technique qui facilite le transport d'un tel aménagement de parechoc ainsi que son assemblage sur le véhicule automobile.

Selon un premier aspect des caractéristiques supplémentaires, on atteint au moins l'un des objectifs précités avec un aménagement de parechoc pour véhicule automobile, l'aménagement de parechoc comprenant (i) un dispositif d'éclairage et/ou de signalisation avant, (ii) une peau de parechoc située en-dessous du dispositif d'éclairage et/ou de signalisation, (iii) un support de fixation solidarisé à la peau de parechoc, (iv) une extension de peau de parechoc configurée pour protéger une partie basse du dispositif d'éclairage et/ou de signalisation, l'extension de peau de parechoc étant fixée solidairement à une extrémité longitudinale supérieure de la peau de parechoc par l'intermédiaire d'un organe de fixation formant une charnière pouvant prendre une configuration angulaire ouverte dans laquelle un bord longitudinal supérieur de l'extension de peau de parechoc est désolidarisé du support de fixation et une configuration angulaire fermée dans laquelle le bord longitudinal supérieur de l'extension de peau de parechoc est solidarisé au support de fixation. Selon l'invention conforme à son premier aspect, l'extension de peau de parechoc comprend un dispositif de fixation détachable configuré pour fixer solidairement l'extension de peau de parechoc sur le support de fixation dans la configuration angulaire ouverte de la charnière.

La charnière formant l'organe de fixation permet de fixer solidairement l'extension de peau de parechoc sur la peau de parechoc au travers d'une liaison articulée qui autorise une mobilité de l'extension de peau de parechoc relativement à la peau de parechoc, permettant de faire pivoter l'extension de peau de parechoc relativement à la peau de parechoc.

La charnière formant l'organe de fixation de l'extension de peau de parechoc sur la peau de parechoc est ainsi configurée pour pouvoir prendre n'importe quelle configuration angulaire entre la configuration ouverte et la configuration angulaire fermée. La configuration angulaire de la charnière s'entend de sa rotation autour de son axe de rotation. La configuration angulaire ouverte de la charnière formant l'organe de fixation est celle prévue pour un transport et une livraison de l'aménagement de peau de parechoc conforme au premier aspect de l'invention sur le véhicule automobile auquel il est destiné.

Dans la configuration angulaire fermée de la charnière, l'extension de peau de parechoc est configurée dans sa configuration assemblée et définitive, telle qu'on la trouve lorsque l'aménagement de parechoc est mis en oeuvre sur le véhicule automobile avec lequel il est destiné à collaborer.

Le dispositif de fixation détachable permet astucieusement de solidariser l'extension de peau de parechoc au support de fixation - de manière temporaire et amovible - lors du transport de l'aménagement de peau de parechoc, afin d'éviter que la charnière ne soit en roue libre et que l'extension de peau de parechoc ne s'endommage du fait de vibrations entrainant une libre rotation de la charnière autour de son axe de rotation.

Cette configuration avantageuse permet ainsi de diminuer les risques de casses ou d'endommagement des éléments formant l'aménagement de parechoc conforme au premier aspect des caractéristiques supplémentaires. Consécutivement, cette configuration conduit à faciliter le transport et l'assemblage de l'aménagement de parechoc sur le véhicule automobile auquel il est destiné.

Dans le contexte des caractéristiques supplémentaires, la protection du dispositif d'éclairage et/ou de signalisation du véhicule automobile s'entend de l'extension de peau de parechoc configurée pour coiffer au moins une partie basse du dispositif d'éclairage et/ou de signalisation lors du montage. En d'autres termes, l'extension de peau de parechoc est configurée pour fermer au moins la partie basse du dispositif d'éclairage et/ou de signalisation.

Cette configuration avantageuse permet ainsi de protéger le dispositif d'éclairage et/ou de signalisation durant le fonctionnement du véhicule automobile. En outre, la réalisation d'une telle extension de peau de parechoc située au niveau de l'extrémité longitudinale de la peau de parechoc permet de l'adapter à de nombreuses géométries et/ou formes et/ou emplacement du dispositif d'éclairage et/ou de signalisation en évitant ainsi de laisser des ouvertures en face avant du véhicule automobile lorsque le dispositif d'éclairage et/ou de signalisation y est monté. Consécutivement, les caractéristiques supplémentaires conforme à son premier aspect permet d'optimiser les coûts de production et de faciliter son industrialisation.

Dans le contexte des caractéristiques supplémentaires, la partie basse du dispositif d'éclairage et/ou de signalisation est celle située à proximité du parechoc, relativement à une partie haute dudit dispositif d'éclairage et/ou de signalisation qui est située à proximité d'un parebrise du véhicule automobile.

L'aménagement de parechoc conforme au premier aspect des caractéristiques supplémentaires comprend avantageusement au moins un des perfectionnements ci-dessous, les caractéristiques techniques formant ces perfectionnements pouvant être prises seules ou en combinaison :
- le dispositif de fixation détachable comprend un premier élément de fixation situé sur le support de fixation, et un deuxième élément de fixation situé sur l'extension de peau de parechoc, le premier élément de fixation collaborant avec le deuxième élément de fixation par collaboration de formes complémentaires. A titre d'exemples non limitatifs, le premier élément de fixation s'engage dans le deuxième élément de fixation par accouplement mécanique, préférentiellement sans jeu, ou par clipsage ;
- le deuxième élément de fixation du dispositif de fixation détachable prend la forme d'un plot qui s'étend en saillie de l'extension de peau de parechoc, le plot étant configuré pour s'engager et s'accoupler dans le premier élément de fixation qui prend la forme d'un orifice complémentaire formé sur le support de fixation ;
- l'orifice complémentaire est portée par une plateforme qui s'étend en saillie du support de fixation. Cette configuration avantageuse permet de mettre à distance l'orifice complémentaire par rapport au support de fixation, facilitant ainsi la collaboration avec l'extension de peau de parechoc ;
- l'extension de peau de parechoc comprend un module de fixation détachable configuré pour fixer solidairement l'extension de peau de parechoc sur le support de fixation dans la configuration fermée de la charnière. A la différence du dispositif de fixation détachable de l'extension de peau de parechoc, le module de fixation détachable permet quant à lui de fixer solidairement l'extension de peau de parechoc sur le support de fixation lorsque la charnière est dans sa configuration angulaire fermée, c'est-à-dire dans la configuration assemblée sur le véhicule automobile avec lequel l'aménagement de parechoc est destiné à être monté ;
- le module de fixation détachable comprend un premier moyen de fixation situé sur le support de fixation, et un deuxième moyen de fixation situé sur l'extension de peau de parechoc, le premier moyen de fixation collaborant avec le deuxième moyen de fixation par collaboration de formes complémentaires. A titre d'exemples non limitatifs, le premier moyen de fixation s'engage dans le deuxième moyen de fixation par accouplement mécanique, préférentiellement sans jeu, ou par clipsage ;
- le deuxième moyen de fixation du module de fixation détachable prend la forme d'un ergot de fixation qui s'étend en saillie de l'extension de peau de parechoc, l'ergot étant configuré pour s'engager et s'accoupler dans le premier moyen de fixation qui prend la forme d'une ouverture complémentaire ménagée sur le support de fixation ;
- le deuxième élément de fixation du dispositif de fixation détachable est situé dans une position proximale de la charnière, et le deuxième moyen de fixation du module de fixation détachable est situé dans une position distale de la charnière
- le dispositif de fixation détachable fonctionne en opposition par rapport au module de fixation détachable. Cette configuration avantageuse permet, au cours d'un même mouvement d'ouverture de la charnière, de solidariser le premier élément de fixation avec le deuxième élément de fixation du dispositif de fixation détachable, concomitamment ou successivement à une désolidarisation du premier moyen de fixation vis-à-vis du deuxième moyen de fixation du module de fixation détachable. A contrario, cette configuration avantageuse permet aussi, au cours d'un même mouvement de fermeture de la charnière, de désolidariser le premier élément de fixation vis-à-vis du deuxième élément de fixation du dispositif de fixation détachable, concomitamment ou successivement à une solidarisation du premier moyen de fixation avec le deuxième moyen de fixation du module de fixation détachable ;
- un axe de rotation de la charnière formant l'organe de fixation est parallèle ou sensiblement parallèle à l'extrémité longitudinale supérieure de la peau de parechoc ;
- la charnière formant l'organe de fixation comprend un premier élément de charnière formé sur l'extrémité longitudinale supérieure de la peau de parechoc, et un deuxième élément de charnière formé sur l'extrémité longitudinale inférieure de l'extension de peau de parechoc. Le premier élément de charnière est configuré pour collaborer avec le deuxième élément de charnière afin de fixer solidairement l'extension de peau de parechoc sur la peau de parechoc tout en autorisant un mouvement relatif de rotation entre elles. Plus particulièrement, une collaboration du premier élément de charnière avec le deuxième élément de charnière est du type d'un pivot ;
- la charnière est du type d'une charnière clip, le premier élément de charnière étant configuré pour être fixé de manière détachable au deuxième élément de charnière. Cette configuration avantageuse permet de faciliter l'assemblage de l'extension de peau de parechoc sur la peau de parechoc. A titre d'exemple non limitatif, le premier élément de charnière peut prendre la forme d'au moins une portée cylindrique s'étendant selon un axe de rotation, et le deuxième élément de charnière peut prendre la forme d'au moins un clip collaborant avec chaque au moins une portée cylindrique formant le premier élément de charnière, chaque clip formant une mâchoire pouvant pivoter autour de la portée cylindrique correspondante avec laquelle elle collabore par engagement de formes complémentaires. De manière avantageuse, le premier élément de charnière comprend deux portées cylindriques coaxiales ; et le deuxième élément de charnière comprend deux clips situés en regard. Alternativement, le deuxième élément de charnière peut comprendre au moins une portée cylindrique - et préférentiellement deux portées cylindriques coaxiales - et le premier élément de charnière peut comprendre au moins un clip - et préférentiellement deux clips - formant une mâchoire pouvant pivoter autour de la portée cylindrique correspondante avec laquelle il collabore ;
- le premier élément de charnière est configuré pour être encliqueté avec le deuxième élément de charnière ;
- l'extension de peau de parechoc est formée par une pièce plastique. Cette configuration permet avantageusement de réduire les coûts de fabrication et de faciliter les procédés de fabrication de l'extension de peau de parechoc. D'une manière générale, l'extension de peau de parechoc et/ou le support de fixation et/ou le renfort de parechoc et/ou la peau de parechoc sont formées de plastique.

Selon un deuxième aspect des caractéristiques supplémentaires, il est proposé un véhicule automobile comprenant au moins un aménagement de parechoc conforme au premier aspect de l'invention ou selon l'un quelconque de ses perfectionnements, chaque au moins un aménagement de parechoc étant associé à l'un des dispositifs d'éclairage et/ou de signalisation avant du véhicule automobile afin de fermer au moins la partie basse du dispositif d'éclairage et/ou de signalisation correspondant.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Aménagement de parechoc (1) pour véhicule automobile (2), l'aménagement de parechoc (1) comprenant :
- un dispositif d'éclairage et/ou de signalisation (10) avant ;
- une peau de parechoc (11) située en-dessous du dispositif d'éclairage et/ou de signalisation (10) ;
- une extension de peau de parechoc (12) fixée solidairement à une extrémité longitudinale supérieure (112) de la peau de parechoc (11) par l'intermédiaire d'un organe de fixation, l'extension de peau de parechoc (12) étant configuré pour protéger une partie basse (101) du dispositif d'éclairage et/ou de signalisation (10) de véhicule automobile (2) ,
**caractérisé en ce que** l'organe de fixation de l'extension de peau de parechoc (12) sur la peau de parechoc (11) forme une charnière.

2. Aménagement de parechoc (1) selon la revendication précédente, dans lequel la charnière formant l'organe de fixation comprend un premier élément de charnière formé sur l'extrémité longitudinale supérieure (112) de la peau de parechoc (11), et un deuxième élément de charnière formé sur l'extrémité longitudinale inférieure de l'extension de peau de parechoc (11).

3. Aménagement de parechoc (1) selon la revendication précédente, dans lequel la charnière est du type d'une charnière clip, le premier élément de charnière étant configuré pour être fixé de manière détachable au deuxième élément de charnière.

4. Aménagement de parechoc (1) selon la revendication précédente, dans lequel le premier élément de charnière est configuré pour être encliqueté avec le deuxième élément de charnière.

5. Aménagement de parechoc (1) selon la revendication précédente, dans lequel l'aménagement de parechoc (1) comprend un support de fixation (13) configuré pour permettre une fixation détachable de l'extension de peau de parechoc (12) sur ledit support de fixation (13), le support de fixation (13) étant solidarisé à la peau de parechoc (11).

6. Aménagement de parechoc (1) selon l'une quelconque des revendications précédentes, dans lequel l'aménagement de parechoc (1) comprend un renfort de parechoc (14) sur lequel la peau de parechoc (11) est solidarisé.

7. Aménagement de parechoc (1) selon la revendication précédente prise en combinaison avec la revendication 5, dans lequel le support de fixation (13) est fixé de manière détachable au renfort de parechoc (14).

8. Véhicule automobile (2) comportant au moins un aménagement de parechoc (1) selon l'une quelconque des revendications précédentes, chaque au moins un aménagement de parechoc (1) étant associé à l'un des dispositifs d'éclairage et/ou de signalisation (10) avant du véhicule automobile (2) afin de fermer au moins la partie basse (101) du dispositif d'éclairage et/ou de signalisation (10) correspondant.

## Patentansprüche

1. [Patentanspruch 1] Stoßstangenanordnung (1) für ein Kraftfahrzeug (2), wobei die Stoßstangenanordnung (1) umfasst:
- einer vorderen Beleuchtungs- und/oder Signalgebungsvorrichtung (10) ;
- eine Stoßstangenhaut (11), die sich unterhalb der Beleuchtungs- und/oder Signalgebungsvorrichtung (10) befindet;
- eine Stoßstangenhautverlängerung (12), die über ein Befestigungsorgan fest an einem oberen Längsende (112) der Stoßstangenhaut (11) befestigt ist, wobei die Stoßstangenhautverlängerung (12) so konfiguriert ist, dass sie einen unteren Teil (101) der Beleuchtungs- und/oder Signalgebungsvorrichtung (10) eines Kraftfahrzeugs (2) schützt,
**dadurch gekennzeichnet, dass** das Organ zur Befestigung der Stoßstangenhautverlängerung (12) an der Stoßstangenhaut (11) ein Scharnier bildet.

2. Stoßstangenanordnung (1) nach dem vorhergehenden Anspruch, wobei das das Befestigungsorgan bildende Scharnier ein erstes, am oberen Längsende (112) der Stoßstangenhaut (11) ausgebildetes Scharnierelement und ein zweites, am unteren Längsende des Stoßstangenhautfortsatzes (11) ausgebildetes Scharnierelement umfasst.

3. Stoßstangenanordnung (1) nach dem vorhergehenden Anspruch, wobei das Scharnier vom Typ eines Clipscharniers ist, wobei das erste Scharnierelement so konfiguriert ist, dass es lösbar am zweiten Scharnierelement befestigt werden kann.

4. Stoßstangenanordnung (1) nach dem vorhergehenden Anspruch, wobei das erste Scharnierelement so ausgestaltet ist, dass es mit dem zweiten Scharnierelement einrastet.

5. Stoßstangenanordnung (1) nach dem vorhergehenden Anspruch, wobei die Stoßstangenanordnung (1) einen Befestigungshalter (13) umfasst, der so konfiguriert ist, dass er eine lösbare Befestigung der Stoßstangenhautverlängerung (12) an dem Befestigungshalter (13) ermöglicht, wobei der Befestigungshalter (13) fest mit der Stoßstangenhaut (11) verbunden ist.

6. Stoßstangenanordnung (1) nach einem der vorhergehenden Ansprüche, wobei die Stoßstangenanordnung (1) eine Stoßstangenverstärkung (14) umfasst, an der die Stoßstangenhaut (11) fest angebracht ist.

7. Stoßstangenanordnung (1) nach dem vorhergehenden Anspruch in Verbindung mit Anspruch 5, wobei die Befestigungshalterung (13) lösbar an der Stoßstangenverstärkung (14) befestigt ist.

8. Kraftfahrzeug (2) mit mindestens einer Stoßstangenanordnung (1) nach einem der vorhergehenden Ansprüche, wobei jede mindestens eine Stoßstangenanordnung (1) mit einer der vorderen Beleuchtungs- und/oder Signaleinrichtungen (10) des Kraftfahrzeugs (2) verbunden ist, um mindestens den unteren Bereich (101) der entsprechenden Beleuchtungs- und/oder Signaleinrichtung (10) zu schließen.

## Claims

1. A bumper arrangement (1) for a motor vehicle (2), the bumper arrangement (1) comprising :
- a front lighting and/or signalling device (10) ;
- a bumper skin (11) located below the lighting and/or signalling device (10);
- a bumper skin extension (12) fixed integrally to an upper longitudinal end (112) of the bumper skin (11) by means of a fastening member, the bumper skin extension (12) being configured to protect a lower part (101) of the lighting and/or signalling device (10) of a motor vehicle (2),
**characterized in that** the member for fixing the bumper skin extension (12) to the bumper skin (11) forms a hinge.

2. Bumper arrangement (1) according to the preceding claim, wherein the hinge forming the fastening member comprises a first hinge element formed on the upper longitudinal end (112) of the bumper skin (11), and a second hinge element formed on the lower longitudinal end of the bumper skin extension (11).

3. A bumper arrangement (1) according to the preceding claim, wherein the hinge is of the type of a clip hinge, the first hinge element being configured to be detachably attached to the second hinge element.

4. A bumper arrangement (1) according to the preceding claim, wherein the first hinge member is configured to be snap-fitted with the second hinge member.

5. A bumper arrangement (1) according to the preceding claim, wherein the bumper arrangement (1) comprises an attachment bracket (13) configured to allow detachable attachment of the bumper skin extension (12) to said attachment bracket (13), the attachment bracket (13) being integral with the bumper skin (11).

6. A bumper arrangement (1) according to any one of the preceding claims, wherein the bumper arrangement (1) comprises a bumper reinforcement (14) to which the bumper skin (11) is secured.

7. A bumper arrangement (1) according to the preceding claim taken in combination with claim 5, wherein the attachment bracket (13) is detachably attached to the bumper reinforcement (14).

8. Motor vehicle (2) comprising at least one bumper arrangement (1) according to any one of the preceding claims, each at least one bumper arrangement (1) being associated with one of the front lighting and/or signalling devices (10) of the motor vehicle (2) in order to close at least the lower part (101) of the corresponding lighting and/or signalling device (10).
